Europäisches Patentamt

European Patent Office

Office européen des brevets

(11) Numéro de publication: **0 023 185**
A1

## (12) DEMANDE DE BREVET EUROPEEN

(21) Numéro de dépôt: **80401099.9**

(22) Date de dépôt: **24.07.80**

(51) Int. Cl.³: **G 06 F 7/52**

(30) Priorité: **24.07.79 FR 7919083**

(43) Date de publication de la demande:
**28.01.81 Bulletin 81/4**

(84) Etats Contractants Désignés:
**BE CH DE GB IT LI LU NL SE**

(71) Demandeur: **SEMS - SOCIETE EUROPEENNE DE MINI-INFORMATIQUE ET DE SYSTEMES**
**1, rue de Provence**
**F-38130 Echirolles(FR)**

(72) Inventeur: **Bolatre, Daniel**
**"THOMSON-CSF" SCPI 173, Bld Haussmann**
**F-75360 Paris Cedex 08(FR)**

(74) Mandataire: **Benoit, Monique et al,**
**"THOMSON-CSF" - SCPI 173, bld Haussmann**
**F-75360 Paris Cedex 08(FR)**

(54) **Dispositif d'élaboration du quotient de deux nombres décimaux et diviseur comportant un tel dispositif.**

(57) Dispositif d'élaboration du quotient de la division de deux nombres décimaux.

Ce dispositif comporte deux mémoires ($M_1$ et $M_2$) recevant les deux chiffres ($d_{11}$, $d_{12}$) ($d_{21}$, $d_{22}$) de poids les plus forts respectivement du dividende ($D_1$) et du diviseur ($D_2$), et une troisième mémoire recevant les nombres ($m_1$, $m_2$) fournis par les deux mémoires précédentes. Les deux premières mémoires ($M_1$, $M_2$) réalisent un découpage de la suite des nombres de 10 à 99 en un nombre fini de zones, et fournissent à partir du nombre reçu le numéro ($m_1$, $m_2$) de la zone à laquelle il appartient ; la troisième mémoire ($M_3$) contient les plus grands quotients possibles correspondant à chaque zone, c'est-à-dire le quotient obtenu en divisant le plus grand nombre compris dans la zone contenant le dividende ($D_1$) par le plus petit nombre compris dans la zone contenant le diviseur ($D_2$) ; ce nombre fourni par la troisième mémoire ($M_3$) ou le nombre qui lui est inférieur d'une unité est le quotient réel des nombres d'entrée.

FIG_1

1

DISPOSITIF D'ELABORATION DU QUOTIENT DE
DEUX NOMBRES DECIMAUX ET DIVISEUR
COMPORTANT UN TEL DISPOSITIF

La présente invention concerne la réalisation
de l'opération de division de deux nombres décimaux
l'un par l'autre, et elle a plus particulièrement
pour objet un dispositif d'élaboration du quotient
de cette division.

Pour réaliser une division entre deux nombres
décimaux, on a généralement recours à la conversion
préalable en binaire, la division elle-même s'effectuant en binaire et le résultat étant ultérieurement
converti à nouveau en décimal ; la division binaire
s'effectue soit à l'aide d'un opérateur banalisé et
piloté par un programme spécifique, soit à l'aide
d'un opérateur spécialisé. Toutefois, ces conversions
représentent un inconvénient que la présente invention permet d'éviter en réalisant l'opération de division directement sur des nombres décimaux.

Il se pose alors le problème de l'estimation
du quotient : à chaque étape de la division, il faut
estimer un chiffre décimal du quotient, puis multiplier le diviseur par ce chiffre estimé et retrancher
ce produit du dividende ou du reste partiel. Suivant
le résultat de cette soustraction (positif ou négatif, supérieur ou inférieur au diviseur), il est ou
non nécessaire de recommencer cette série d'opérations
avec un nouveau chiffre décimal, jusqu'à ce que soit
obtenu un reste positif et plus petit que le diviseur.
Il apparaît que l'opération de division est d'autant
plus longue que les estimations sont rarement correctes.

La présente invention a pour objet un dispositif d'élaboration du quotient tel que le chiffre estimé soit le chiffre correct plus d'une fois sur deux et que, dans les autres cas, ce soit le chiffre qui est inférieur d'une unité au chiffre primitivement estimé qui soit correct.

A cet effet, le diviseur selon l'invention comporte trois mémoires : les deux premières ont un contenu identique, et reçoivent un nombre fini (n) de chiffres de poids les plus forts respectivement du dividende et du diviseur ; dans un mode de réalisation, ce nombre n est égal à deux ; chacune de ces mémoires fait correspondre aux chiffres reçus un numéro de zone, c'est-à-dire que la suite des nombres formés pour ces n chiffres (de 10 à 99 dans l'exemple précédent) est découpée en un nombre fini de zones ; la troisième mémoire reçoit les deux numéros de zones fournis par les deux premières mémoires ; dans cette troisième mémoire sont enregistrés les plus grands quotients possibles pour chaque combinaison, ces quotients étant obtenus en divisant le plus grand nombre compris dans la zone contenant le dividende par le plus petit nombre compris dans la zone contenant le diviseur. La définition des zones dans les deux premières mémoires est telle que le chiffre fourni par la troisième soit le quotient correct plus d'une fois sur deux et que, dans le cas où il ne le serait pas, le quotient correct soit le chiffre qui lui est inférieur d'une unité.

D'autres objets, caractéristiques et résultats de l'invention ressortiront de la description suivante, donnée à titre d'exemple non limitatif et illustrée par les dessins annexés qui représentent :

    - la figure 1, le schéma général du dispositif selon l'invention ;

    - la figure 2, un tableau explicatif du décou-

3

page en zones réalisé dans deux des mémoires utilisées dans le dispositif selon l'invention ;

- la figure 3, un tableau explicatif du contenu de la troisième mémoire utilisée dans le dispositif selon l'invention.

Sur ces différentes figures, les mêmes références se rapportent aux mêmes éléments.

Ce dispositif comporte trois mémoires repérées $M_1$, $M_2$ et $M_3$ qui sont de préférence des mémoires mortes (ou mémoires à lecture seule ou ROM).

La mémoire $M_1$ reçoit un nombre fini $\underline{n}$ de chiffres décimaux, ce nombre étant égal à deux dans ce mode de réalisation et référencés $d_{11}$ et $d_{12}$, qui sont les chiffres de poids les plus forts du dividende (ou du reste partiel d'une division en cours) $D_1$. Ces chiffres décimaux sont de préférence codés en binaire, à l'aide de tout code connu, sur au moins quatre bits ; la mémoire $M_1$ comporte donc au moins huit entrées dans le cas où n = 2.

De façon analogue, la mémoire $M_2$ reçoit n chiffres décimaux, dans le cas de la figure : $d_{21}$ et $d_{22}$, codés sur quatre bits chacun, qui sont les deux chiffres de poids les plus forts du diviseur $D_2$.

Chacune des mémoires $M_1$ et $M_2$ peut donc recevoir un nombre quelconque dans la suite des nombres de 10 à 99 si n = 2. Ces mémoires ont pour fonction de découper cette suite de nombres de 10 à 99 en un certain nombre de zones numérotées et d'affecter au nombre reçu le numéro de zone correspondant.

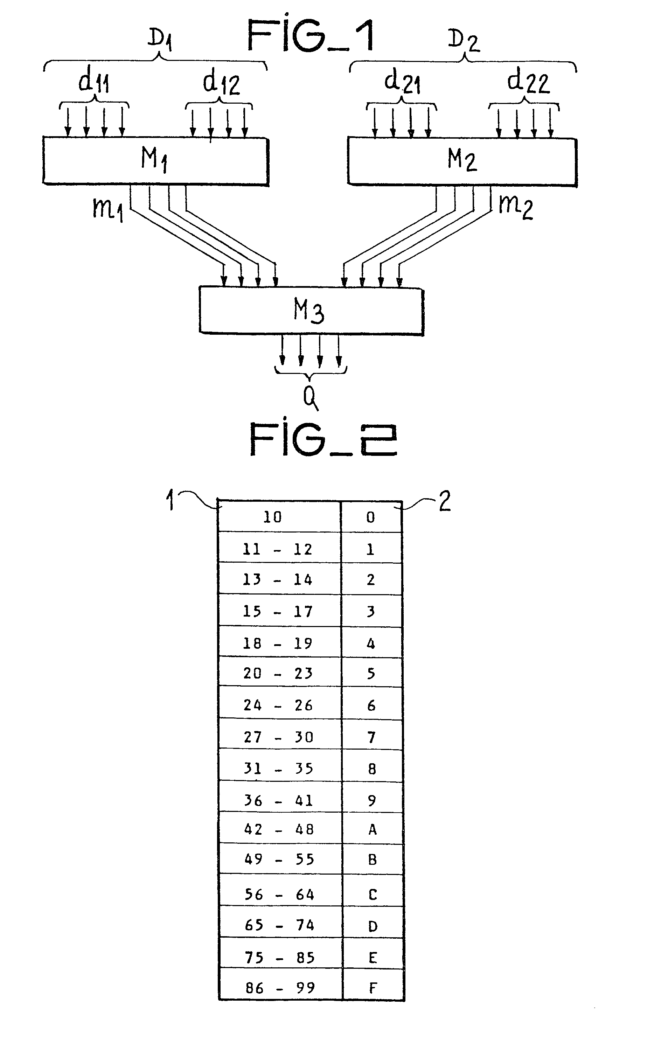

La figure 2 illustre un mode de découpage en zones, c'est-à-dire le contenu des mémoires $M_1$ ou $M_2$, dans le cas où n = 2.

L'espace des nombres de 10 à 99 est divisé en seize zones, ce qui représente un compromis satisfaisant entre la complexité et la précision, et qui permet en outre une numérotation (hexadécimale) sur

4

quatre bits. La figure 2 se présente sous la forme d'un tableau dont la première colonne (1) représente les valeurs que peuvent prendre les nombres d'entrée ($d_{11}$ - $d_{12}$ pour $M_1$ et $d_{21}$ - $d_{22}$ pour $M_2$) ; ces valeurs sont donc divisées en seize tranches et la deuxième colonne du tableau (2) indique en représentation hexadécimale le numéro de la zone correspondante qui est fourni sur la sortie ($m_1$ pour $M_1$ et $m_2$ pour $M_2$) de la mémoire. Par exemple, pour la deuxième zone, si $d_{11}$ est égal à 1 et $d_{12}$ est égal à 2, on se trouve dans la deuxième zone du tableau qui porte le numéro 1 et la mémoire $M_1$ fournit en conséquence une sortie $m_1$ égale à 1.

Il est par ailleurs à noter que les différentes zones sont de longueur inégale ; en effet, le découpage en zones est fait suivant une série géométrique de raison $\sqrt[16]{10}$, la borne théorique des zones étant toutefois arrondie au nombre entier le plus proche. Le résultat de ces approximations est donné sur le tableau de la figure 2.

Si l'on se reporte à nouveau à la figure 1, on voit que la mémoire $M_1$ fournit donc le numéro de zone ($m_1$) dans laquelle sont compris les deux chiffres ($d_{11}$ et $d_{12}$) de poids les plus forts du dividende ($D_1$) et que la mémoire $M_2$ fournit de la même manière le numéro de zone ($m_2$) dans laquelle est compris le nombre formé par les deux chiffres ($d_{21}$ et $d_{22}$) de poids les plus forts du diviseur ($D_2$). Ces deux numéros de zones $m_1$ et $m_2$ sont dirigés vers la troisième mémoire ($M_3$) qui a pour fonction de fournir un nombre Q qui est le quotient estimé de la division de $D_1$ par $D_2$.

A cet effet, la mémoire $M_3$ contient pour chaque valeur possible du couple $m_1$, $m_2$ le quotient maximum possible Q, obtenu en divisant le plus grand nombre compris dans la zone contenant le dividende ($m_1$) par le plus petit nombre compris dans la zone contenant le diviseur ($m_2$).

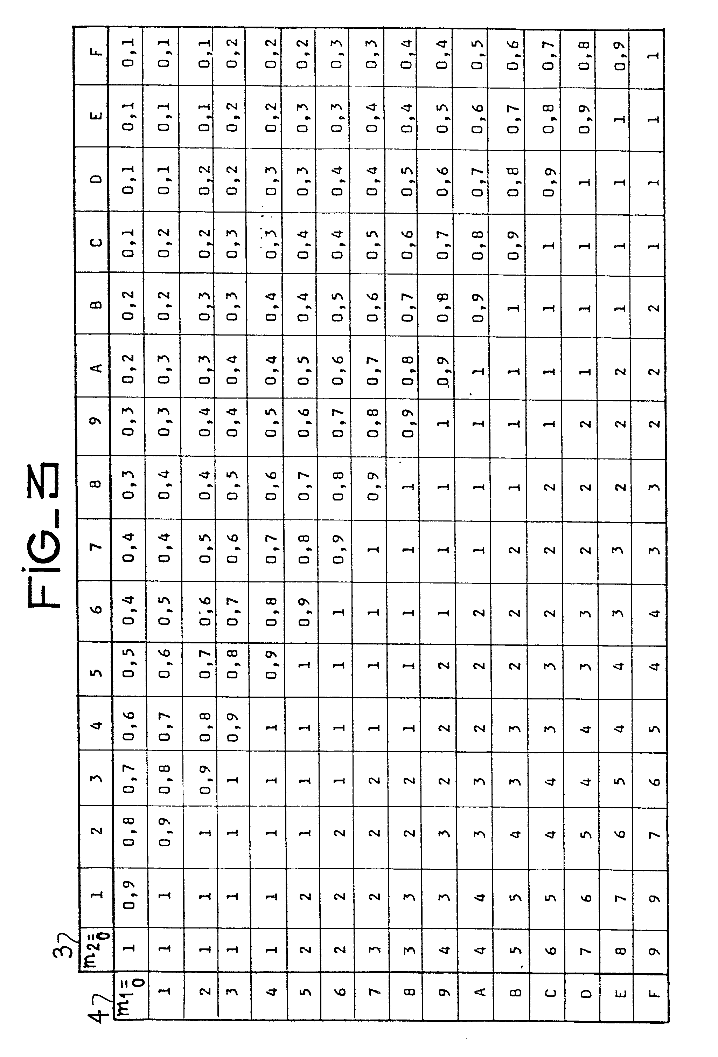

La figure 3 illustre le contenu de la mémoire $M_3$ correspondant aux contenus des mémoires $M_1$ et $M_2$ décrits figure 2.

C'est un tableau à deux entrées dans lequel la première ligne (3) indique les valeurs possibles de la variable $m_2$ et la première colonne (4) indique les valeurs possibles de la variable $m_1$. La valeur du quotient maximum Q est obtenue à l'intersection des valeurs correspondantes de $m_1$ et $m_2$.

Pour $m_1 = m_2$, on a bien entendu Q = 1, ce qui constitue une diagonale du tableau. A droite de cette diagonale, on a $m_2 > m_1$ c'est-à-dire que le diviseur est plus grand que le dividende : dans ce cas, la mémoire $M_3$ fournit directement deux chiffres du quotient estimé, le premier étant 0.

Un important avantage de ce dispositif est que le quotient réel est, du fait de la longueur choisie pour les zones, soit le quotient estimé dans plus d'un cas sur deux, soit le chiffre qui lui est inférieur (du fait qu'il correspond au dividende maximum et au diviseur minimum) d'une unité.

Ce dispositif d'estimation du quotient est destiné à faire partie d'un diviseur décimal, qui comporte en outre au moins un multiplicateur, un soustracteur et des registres mémoires, ces éléments permettant, ainsi qu'il est dit plus haut, de calculer le reste partiel de la division, de vérifier que le quotient estimé est correct, de calculer le nouveau reste, ainsi que de conserver les données et les résultats intermédiaires.

6

# REVENDICATIONS

1. Dispositif d'élaboration d'un quotient de deux nombres décimaux, caractérisé par le fait qu'il comporte : une première mémoire ($M_1$) recevant un nombre fini (n) de chiffres ($d_{11}$, $d_{12}$) de poids les plus forts du dividende ou du reste partiel ; une seconde mémoire ($M_2$) recevant le même nombre (n) de chiffres ($d_{21}$, $d_{22}$) de poids les plus forts du diviseur, la suite des nombres entiers formée par ces chiffres étant découpée en un nombre fini de zones, chacune de ces mémoires contenant des numéros affectés à chacune de ces zones et fournissant le numéro de la zone à laquelle appartient le nombre formé par les chiffres d'entrée, ce dispositif comportant en outre une troisième mémoire qui reçoit les numéros de zone fournis par les deux premières mémoires, et qui contient et fournit, pour chaque combinaison possible de ces deux numéros, le plus grand quotient possible.

2. Dispositif selon la revendication 1, caractérisé par le fait que la première ($M_1$) et la seconde ($M_2$) mémoires reçoivent chacune un nombre (n) égal à deux chiffres d'entrée.

3. Dispositif selon l'une des revendications précédentes, caractérisé par le fait que les zones comportent un nombre croissant de nombres entiers.

4. Dispositif selon la revendication 2, caractérisé par le fait que la suite des nombres entiers de 10 à 99 est découpée en seize zones suivant une progression géométrique de raison $\sqrt[16]{10}$.

5. Dispositif selon la revendication 1, caractérisé par le fait que les trois mémoires sont des mémoires à lecture seule.

7

6. Diviseur décimal, caractérisé par le fait qu'il comporte un dispositif d'élaboration du quotient de deux nombres décimaux selon l'une des revendications précédentes.

# FIG_1

$D_1$ $D_2$

$d_{11}$ $d_{12}$ $d_{21}$ $d_{22}$

$M_1$ $M_2$

$m_1$ $m_2$

$M_3$

$Q$

# FIG_2

| 1 | | 2 |
|---|---|---|
| 10 | | 0 |
| 11 - 12 | | 1 |
| 13 - 14 | | 2 |
| 15 - 17 | | 3 |
| 18 - 19 | | 4 |
| 20 - 23 | | 5 |
| 24 - 26 | | 6 |
| 27 - 30 | | 7 |
| 31 - 35 | | 8 |
| 36 - 41 | | 9 |
| 42 - 48 | | A |
| 49 - 55 | | B |
| 56 - 64 | | C |
| 65 - 74 | | D |
| 75 - 85 | | E |
| 86 - 99 | | F |

# FIG_3

| m2=0 | 1 | 2 | 3 | 4 | 5 | 6 | 7 | 8 | 9 | A | B | C | D | E | F |
|---|---|---|---|---|---|---|---|---|---|---|---|---|---|---|---|
| m1=0 : 1 | 0,9 | 0,8 | 0,7 | 0,6 | 0,5 | 0,4 | 0,4 | 0,3 | 0,3 | 0,2 | 0,2 | 0,1 | 0,1 | 0,1 | 0,1 |
| 1 : 1 | 1 | 0,9 | 0,8 | 0,7 | 0,6 | 0,5 | 0,4 | 0,4 | 0,3 | 0,3 | 0,2 | 0,2 | 0,1 | 0,1 | 0,1 |
| 2 : 1 | 1 | 1 | 0,9 | 0,8 | 0,7 | 0,6 | 0,5 | 0,4 | 0,4 | 0,3 | 0,3 | 0,2 | 0,2 | 0,1 | 0,1 |
| 3 : 1 | 1 | 1 | 1 | 0,9 | 0,8 | 0,7 | 0,6 | 0,5 | 0,4 | 0,4 | 0,3 | 0,3 | 0,2 | 0,2 | 0,2 |
| 4 : 1 | 1 | 1 | 1 | 1 | 0,9 | 0,8 | 0,7 | 0,6 | 0,5 | 0,4 | 0,4 | 0,3 | 0,3 | 0,2 | 0,2 |
| 5 : 2 | 2 | 1 | 1 | 1 | 1 | 0,9 | 0,8 | 0,7 | 0,6 | 0,5 | 0,4 | 0,4 | 0,3 | 0,3 | 0,2 |
| 6 : 2 | 2 | 2 | 1 | 1 | 1 | 1 | 0,9 | 0,8 | 0,7 | 0,6 | 0,5 | 0,4 | 0,4 | 0,3 | 0,3 |
| 7 : 3 | 2 | 2 | 2 | 1 | 1 | 1 | 1 | 0,9 | 0,8 | 0,7 | 0,6 | 0,5 | 0,4 | 0,4 | 0,3 |
| 8 : 3 | 3 | 2 | 2 | 1 | 1 | 1 | 1 | 1 | 0,9 | 0,8 | 0,7 | 0,6 | 0,5 | 0,4 | 0,4 |
| 9 : 4 | 3 | 3 | 2 | 2 | 2 | 1 | 1 | 1 | 1 | 0,9 | 0,8 | 0,7 | 0,6 | 0,5 | 0,4 |
| A : 4 | 4 | 3 | 3 | 2 | 2 | 2 | 1 | 1 | 1 | 1 | 0,9 | 0,8 | 0,7 | 0,6 | 0,5 |
| B : 5 | 5 | 4 | 3 | 3 | 2 | 2 | 2 | 1 | 1 | 1 | 1 | 0,9 | 0,8 | 0,7 | 0,6 |
| C : 6 | 5 | 4 | 4 | 3 | 3 | 2 | 2 | 2 | 1 | 1 | 1 | 1 | 0,9 | 0,8 | 0,7 |
| D : 7 | 6 | 5 | 4 | 4 | 3 | 3 | 2 | 2 | 2 | 1 | 1 | 1 | 1 | 0,9 | 0,8 |
| E : 8 | 7 | 6 | 5 | 4 | 4 | 3 | 3 | 2 | 2 | 2 | 1 | 1 | 1 | 1 | 0,9 |
| F : 9 | 9 | 7 | 6 | 5 | 4 | 4 | 3 | 3 | 2 | 2 | 2 | 1 | 1 | 1 | 1 |

37

47

**0023185**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| | <u>US - A - 3 736 413</u> (PROGRAMMATICS)<br><br>* Figures 3,4; colonne 3, ligne 8 - colonne 4, ligne 27; colonne 6, ligne 8 - colonne 7, ligne 26 *<br><br>---- | 1,6 |

**CLASSEMENT DE LA DEMANDE (Int. Cl. ³)**

G 06 F 7/52

**DOMAINES TECHNIQUES RECHERCHES (Int. Cl. ³)**

G 06 F 7/52

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-10-1980 | FORLEN |

OEB Form 1503.1  06.78